# EUROPÄISCHE PATENTSCHRIFT

(11) **EP 0 658 701 B1**
(45) Veröffentlichungstag und Bekanntmachung des Hinweises auf die Patenterteilung: **09.07.1997**
(21) Anmeldenummer: 94115101.1
(22) Anmeldetag: 23.09.1994
(51) Int. Cl.: F16F 9/36, B60G 13/08, B60G 15/07

(54) **Hydraulischer Schwingungsdämpfer für Kraftfahrzeuge**
Hydraulic damper for vehicles
Amortisseur hydraulique pour véhicules

(30) Priorität: 18.12.1993 DE 4345116
(43) Veröffentlichungstag der Anmeldung: 21.06.1995
(73) Patentinhaber: August Bilstein GmbH, 58256 Ennepetal (DE)
(72) Erfinder: Adrian, Adolf, D-58256 Ennepetal (DE); Angermann, Rolf, Dr., D-58313 Herdecke (DE)

(56) Entgegenhaltungen:
- DE-A- 2 826 563
- DE-C- 4 207 099

## Beschreibung

Die Erfindung betrifft einen hydraulischen Schwingungsdämpfer für Kraftfahrzeuge nach dem Oberbegriff der Patentansprüche 1 und 2.

Aus der Europäischen Patentanmeldung EP 535 409 A1 ist ein hydraulischer Schwingungsdämpfer mit einem Dämpfungsflüssigkeit enthaltenden Dämpferzylinder, einer sich in diesem hin- und herbewegenden, einen Dämpfungskolben tragenden Kolbenstange bekannt, die in den den Dämpferzylinder und beim Zweirohrschwingungsdämpfer den Dämpfer- und Außenzylinder verschließenden Führungspaket geführt ist. Zur Axialfixierung des Führungspaketes ist die Kante des Dämpferzylinders oder des Außenzylinders teilweise umgebördelt. Die als Druckanschlag dienende Anschlagscheibe stützt sich auf den nicht umgebördelten Teilen der Kante ab. Insbesondere bei größeren Durchmessern von Dämpfer- oder Außenzylinder besteht die Gefahr, daß bei hohen axialen Anschlagkräften die Anschlagscheibe diese nicht vollständig aufnehmen kann oder sich durchdrückt.

Bei einem anderen Schwingungsdämpfer aus der gleichen Veröffentlichung ist die obere Kante des Dämpferzylinders oder Außenzylinders vollständig umgelegt und nimmt einen Dichtungsring zur Abdichtung des Dämpferzylinders auf. Die Anschlagscheibe stützt sich hier direkt auf dem Führungspaket ab.

Die Aufgabe der Erfindung besteht darin, die als Druckanschlag dienende Anschlagscheibe derart abzustützen, daß auch hohe axiale Kräfte von ihr aufgenommen werden und ein Durchdrücken der Anschlagscheibe vermieden wird.

Die Aufgabe wird durh die Merkmale der Patentanspruche 1 und 2 gelöst. Vorteilhafte Weiterbildungen sind in den Unteransprüchen dargestellt.

Erfindungsgemäß schließt sich bei Einrohrschwingungsdämpfern an den radial nach innen umgelegten Bereich des Dämpferzylinders ein axial-zylindrischer Bereich mit einem kleineren Durchmesser als der Dämpferzylinder an, auf den sich die Anschlagkappe abstützt. Bei Zweirohrschwingungsdämpfern schließt sich an den radial nach innen umgelegten Bereich des Außenzylinders ein axial-zylindrischer Bereich mit einem kleineren Durchmesser als der Außenzylinder an, auf dem sich dann die Abschlußkappe abstützt.

In einer vorteilhaften Ausbildung der Erfindung überragt der äußere Mantel des Dämpferzylinders oder bei Zweirohrschwingungsdämpfern des Außenzylindes mit seiner Innenkontur den radial umgelegten Bereich. Mit dieser Ausgestaltung des Endbereiches wird eine definierte Anlage des Führungsverschlusses an dem radial umgelegten Bereich geschaffen.

Nach einer bevorzugten Ausbildung der Erfindung weist der axial-zylindrische Bereich annähernd einen Durchmesser der halben Summe der Durchmesser des Dämpferzylinders oder Außenzylinders und der Kolbenstange auf.

Bei einer weiteren Ausgestaltung ist die Kante des axialzylindrischen Bereiches mindestens axial umgelegt, wodurch eine größere Auflagefläche für die Anschlagkappe geschaffen wird.

Um das Eindringen von Verschmutzungen in Hohlräume zwischen dem Führungsverschluß und der Anschlagkappe zu verhindern, ist vorzugsweise zwischen der Kolbenstange und der Anschlagkappe eine Dichtung angeordnet, deren radialer Bereich zwischen dem Führungsverschluß und der Anschlagkappe liegt und deren axialer Bereich die Kolbenstange umgibt. Vorteilhafterweise weist der axiale Bereich eine mit der Kolbenstange in Verbindung stehende Abstreifkante auf.

Mit der Erfindung wird eine günstigere Abstützung der Anschlagkappe erzielt, durch die die auftretenden axialen Kräfte besser aufgenommen werden und das Führungspaket gegen die Anschlagkräfte von außen geschützt wird.

Nachstehend wird die Erfindung anhand mehrerer Ausführungsbeispiele beschrieben. Die zugehörigen Zeichnungen zeigen:
- Fig. 1: einen Ausschnitt eines Einrohrschwingungsdämpfers,
- Fig. 2: eine Ausbildung der zwischen Kolbenstange und Anschlagkappe angeordneten Dichtung und
- Fig. 3: einen Ausschnitt eines Zweirohrschwingungsdämpfers.

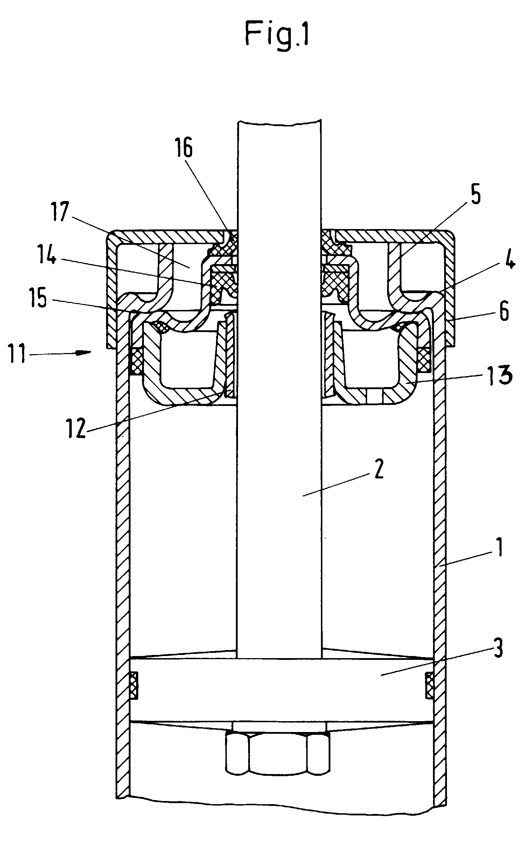

Der in Figur 1 ausschnittsweise dargestellte hydraulische Einrohrschwingungsdämpfer besteht im wesentlichen aus einem Dämpfungsflüssigkeit enthaltenden Dämpferzylinder 1, der durch einen Führungsverschluß 11 verschlossen ist und einem mit der Kolbenstangen 2 verbundenen Dämpfungskolben 3.

Der Führungsverschluß 11 weist im wesentlichen ein zylindrisches Führungsteil 12, das die Ein- und Ausfuhrhübe der Kolbenstange führt, und eine aus Blech geformten Teilen bestehende Abstütz- und Distanzeinheit 13 fit einer Öldichtung 14 für die Kolbenstange 2 auf. Oberhalb der Abstütz- und Distanzeinheit 13 ist eine die Kolbenstange 2 umgreifende Anschlagkappe 6 angeordnet, die den Dämpferzylinder 1 radial umgreift, und auf die beim Einfedern der, zum Beispiel als Gummipuffer ausgebildete, nicht dargestellte Druckanschlag auffährt. Zur axialen Abstützung der Anschlagkappe 6 schließt sich an den radial nach innen gelegten Bereich 4 des Dämpferzylinders 1, der zur Fixierung der Abstütz- und Distanzeinheit 13 dient, ein axial-zylindrischer Bereich 5 mit einem kleineren Durchmesser als der Dämpferzylinder 1 an, auf dem sich die Anschlagkappe 6 abstützt.

Um eine definierte Auflagefläche für den beispielsweise nur durch den Innendruck des Dämpferzylinders gehaltenen Führungsverschluß 11 zu schaffen, überragt der äußere Mantel des Dämpferzylinders 1 mit seiner Innenkontur 15 den radial umgelegten Bereich 4.

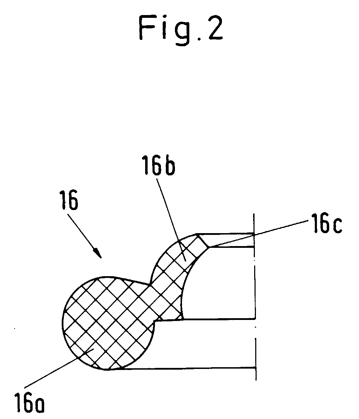

Zur Vermeidung des Eindringens von Verschmutzungen in den zwischen der Anschlagkappe 6 und der Abstütz- und Distanzeinheit 13 des Führungsverschlusses 11 gebildeten Hohlraum 17 ist zwischen der Kolbenstange 2 und der Anschlagkappe 6 eine Dichtung 16 angeordnet, die mit einem radialen Bereich 16a (Fig. 2) zwischen der Abstütz- und Distanzeinheit 13 und der Anschlagkappe 6 liegt und zum Ausgleichen von Toleranzen eine geringe Federrate aufweist. Nach Fig. 2 besitzt dieser Bereich 16a einen kreisförmigen Querschnitt. Der axiale Bereich 16b der Dichtung umgibt die Kolbenstange 2 und kontaktiert diese mit einer Abstreifkante 16c.

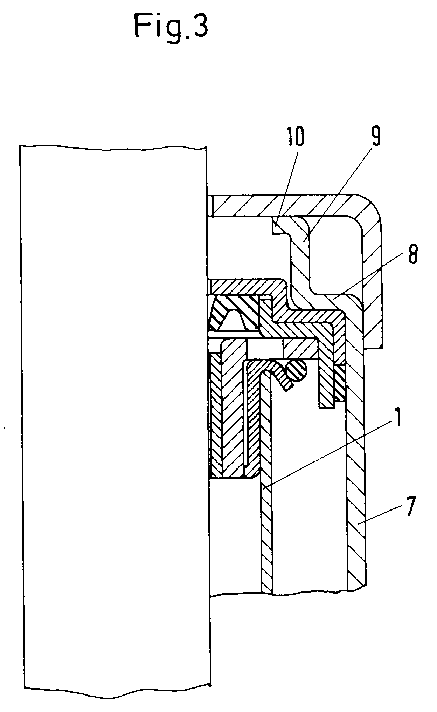

Bei einem Zweirohrschwingungsdämpfer (Fig. 3) umgreift die Abschlußkappe 6 den den Ausgleichsraum 15 bildenden Außenzylinder 7, der mit einem nach innen gelegten Beireich 8 die Abstütz- und Distanzeinheit 13 axial fixiert. An den Bereich 8 schließt sich zur Abstützung der Abschlußkappe 6 ein axial-zylindrischer Bereich 9 an, dessen Kante 10 zur Vergrößerung der Auflagefläche der Absclußkappe 6 beispielsweise radial nach innen umgelegt ist.

Für die günstigste Abstützung der Anschlagkappe 6 weist der axial-zylindrische Bereich 5 oder 9 des Dämpfer- bzw. Außenzylinders 1, 7 einen Durchmesser auf, der die Auflagefläche des Druckanschlages radial halbiert.

### Bezugszeichenliste

- 1: Dämpferzylinder
- 2: Kolbenstange
- 2: Dämpfungskolben
- 4: radialer Bereich
- 5: axial-zylindrischer Bereich
- 6: Anschlagkappe
- 7: Außenzylinder
- 8: radialer Bereich
- 9: axial-zylindrischer Bereich
- 10: Kante
- 11: Führungsverschluß
- 12: Führungsteil
- 13: Abstütz- und Distanzeinheit
- 14: Öldichtung
- 15: Innenkontur
- 16: Dichtung
- 16a: radialer Bereich
- 16b: axialer Bereich
- 16c: Abstreifkante
- 17: Hohlraum

## Patentansprüche

1. Hydraulische Schwingungsdämpfer für Kraftfahrzeuge mit einem Dämpfungsflüssigkeit enthaltenden Dämpferzylinder (1), einer sich in diesem hin- und herbewegenden, einen Dämpfungskolben (3) tragenden Kolbenstange (2), einen an von der Kolbenstange (2) durchdrungenen Ende des Dämpferzylinders angeordneten Führungsverschluß (11) und einer um die Kolbenstange (2) angeordneten Anschlagkappe (6), bei dem die Kante des Dämpferzylinders (1) den Führungsverschluß (11) umgreifend nach innen umgelegt ist, dadurch gekennzeichnet, daß sich an den radial umgelegeten Bereich (4) des Dämpferzylinders (1) ein axial-zylindrischer Bereich (5) mit einem kleineren Durchmesser als der Dämpferzylinder (1) anschließt, auf dem sich die Anschlagkappe (6) abstützt

2. Hydraulische Schwingungsdämpfer für Kraftfahrzeuge mit einem Dämpfungsflüssigkeit enthaltenden Dämpferzylinder (1), einer sich in diesem hin- und herbewegenden, einen Dämpfungskolben (3) tragenden Kolbenstange (2), einen den Dämpferzylinder (1) umgebenden Außenzylinder (7), einen den Dämpfer- und Außenzylinder verschließenden Führungsverschluß (11) und einer um die Kolbenstange (2) angeordneten Anschlagkappe, bei dem die Kante des Außenzylinders (7) den Führungsverschluß (11) umgreifend nach innen umgelegt ist, dadurch gekennzeichnet, daß sich an den radial umgelegten Bereich (8) des Außenzylinders (7) ein axial-zylindrischer Bereich (9) mit einem kleineren Durchmesser als der Außenzylinder (7) anschließt, auf dem sich die Anschlagkappe (6) abstützt.

3. Schwingungsdämpfer nach Anspruch 1 oder 2, daß der äußere Mantel des Dämpferzylinders (1) oder des Außenzylinders (7) den radial umgelegten Bereich (4, 8) mit seiner Innenkontur (15) überragt.

4. Schwingungsdämpfer nach einem der Ansprüche 1 bis 3, dadurch gekennzeichnet, daß der axial-zylindrische Bereich (5; 9) annähernd einen Durchmesser der halben Summe der Durchmesser des Dämpferzylinders (1) oder des Außenzylinder (7) und der Kolbenstange (2) aufweist.

5. Schwingungsdämpfer nach einem der Ansprüche 1 bis 4, dadurch gekennzeichnet, daß die Kante (10) des axialzylindrischen Bereiches (5; 9) mindestens radial umgelegt ist.

6. Schwingungsdämpfer nach einem der Ansprüche 1 bis 5, dadurch gekennzeichnet, daß zwischen der Kolbenstange (2) und der Anschlagkappe (6) eine Dichtung (16) angeordnet ist, deren radialer Bereich (16a) zwischen dem Führungsverschluß (11) und der Anschlagkappe (6) liegt und deren axialer Bereich (16b) die Kolbenstange (2) umgibt.

7. Schwingungsdämpfer nach Anspruch 6, dadurchgekennzeichnet, daß der axiale Bereich (16b) eine mit der Kolbenstange in Verbindung stehende Abstreifkante (16c) aufweist.

## Claims

1. Hydraulic vibration damper for motor vehicles having a damping cylinder (1) containing a damping fluid , a piston rod (2) which supports a damping piston (3) and moves in a reciprocating manner in the said damping cylinder, a guide closing device (11) disposed at that end of the damping cylinder which is penetrated by the piston rod (2) and a stop cap (6) disposed about the piston rod (2), wherein the edge of the damping cylinder (1) is flanged inwards embracing the guide closing device (11), characterised in that an axial cylindrical region (5) having a smaller diameter than the damping cylinder (1) is adjacent to the radial flanged region (4) of the damping cylinder (1) and the said axial cylindrical region supports the stop cap (6).

2. Hydraulic vibration damper for motor vehicles having a damping cylinder (1) containing a damping fluid, a piston rod (2) which supports a damping piston (3) and moves in a reciprocating manner in the said damping cylinder, an outer cylinder (7) which surrounds the damping cylinder (1), a guide closing device (11) which closes the damping and outer cylinder and a stop cap which is disposed about the piston rod (2), wherein the edge of the outer cylinder (7) is flanged inwards embracing the guide closing device (11), characterised in that an axial cylindrical region (9) having a smaller diameter than the outer cylinder (7) is adjacent to the radial flanged region (8) of the outer cylinder (7) and the said axial cylindrical region supports the stop cap (6).

3. Vibration damper as claimed in claim 1 or 2, that the outer periphery of the damping cylinder (1) or of the outer cylinder (7) protrudes with its inner contour (15) beyond the radial flanged region (4, 8).

4. Vibration damper as claimed in any one of claims 1 to 3, characterised in that the axial cylindrical region (5; 9) comprises a diameter of half the total of the diameter of the damping cylinder (1) or of the outer cylinder (7) and the piston rod (2).

5. Vibration damper as claimed in any one of claims 1 to 4, characterised in that the edge (10) of the axial cylindrical region (5; 9) is flanged at least radially.

6. Vibration damper as claimed in any one of claims 1 to 5, characterised in that a seal (16) is disposed between the piston rod (2) and the stop cap (6) and the radial region (16a) of said seal lies between the guide closing device (11) and the stop cap (6) and the axial region (16b) of said seal surrounds the piston rod (2).

7. Vibration damper as claimed in claim 6, characterised in that the axial region (16b) comprises a contact edge (16c) which is connected to the piston rod.

## Revendications

1. Amortisseur hydraulique pour véhicule à moteur, comportant un cylindre d'amortisseur (1) contenant un liquide d'amortissement, une tige de piston (2) portant un piston d'amortissement (3) se déplaçant en va-et-vient dans le cylindre d'amortisseur, un obturateur de guidage (11) disposé à l'extrémité du cylindre d'amortisseur, traversé par la tige de piston (2), et une coiffe de butée (6) disposée autour de la tige de piston (2), dans lequel le bord du cylindre d'amortisseur (1) est rabattu vers l'intérieur en enserrant l'obturateur de guidage (11), caractérisé en ce qu'une région axiale-cylindrique (5) d'un diamètre plus petit que celui du cylindre d'amortisseur (1), sur laquelle s'appuye la coiffe de butée (6), se raccorde à la région radialement rabattue (4) du cylindre d'amortisseur (1).

2. Amortisseur hydraulique pour véhicule à moteur, comportant un cylindre d'amortisseur (1) contenant un liquide d'amortissement, une tige de piston (2) portant un piston d'amortissement (3) se déplaçant en va-et-vient dans le cylindre d'amortisseur, un cylindre extérieur (7) entourant le cylindre d'amortisseur (1), un obturateur de guidage (11) fermant le cylindre d'amortisseur et le cylindre extérieur, et une coiffe de butée disposée autour de la tige de piston (2), dans lequel le bord du cylindre extérieur (7) est rabattu vers l'intérieur en enserrant l'obturateur de guidage (11), caractérisé en ce qu'une région axiale-cylindrique (9) d'un diamètre plus petit que celui du cylindre extérieur (7), sur laquelle s'appuye la coiffe de butée (6), se raccorde à la région radialement rabattue (8) du cylindre extérieur (7).

3. Amortisseur selon la revendication 1 ou 2, caractérisé en ce que l'enveloppe extérieure du cylindre d'amortisseur (1) ou du cylindre extérieur (7) déborde de la région radialement rabattue (4, 8) par son contour intérieur (15).

4. Amortisseur selon l'une des revendications 1 à 3, caractérisé en ce que la région axiale-cylindrique (5; 9) présente un diamètre valant sensiblement la demi-somme du diamètre du cylindre d'amortisseur (1) ou du cylindre extérieur (7) et de la tige de piston (2).

5. Amortisseur selon l'une des revendications 1 à 4, caractérisé en ce que le bord (10) de la région axiale-cylindrique (5; 9) est rabattu au moins radialement.

6. Amortisseur selon l'une des revendications 1 à 5, caractérisé en ce qu'entre la tige de piston (2) et la coiffe de butée (6) est disposé un joint d'étanchéité (16) dont la région radiale (16a) est située entre l'obturateur de guidage (11) et la coiffe de butée (6), et dont la région axiale (16b) entoure la tige de piston (2).

7. Amortisseur selon la revendication 6, caractérisé en ce que la région axiale (16b) présente un bord de raclage (16c) en relation avec la tige de piston.
